# EUROPÄISCHE PATENTSCHRIFT

(11) **EP 2 517 218 B1**
(45) Veröffentlichungstag und Bekanntmachung des Hinweises auf die Patenterteilung: **21.01.2015**
(21) Anmeldenummer: 10798805.7
(22) Anmeldetag: 21.12.2010
(51) Int. Cl.: H01G 7/04, H01G 7/06, H01L 29/93

(54) **VARAKTOR UND VERFAHREN ZUR HERSTELLUNG EINES VARAKTORS**
VARACTOR AND METHOD FOR MANUFACTURING IT
VARACTOR ET SA METHODE DE FABRICATION

(30) Priorität: 21.12.2009 DE 102009059873
(43) Veröffentlichungstag der Anmeldung: 31.10.2012
(73) Patentinhaber: Epcos AG, 81669 München (DE)
(72) Erfinder: TESTINO, Andrea, 8530 Deutschlandsberg (AT)
(74) Vertreter: Epping - Hermann - Fischer
(86) Internationale Anmeldenummer: PCT/EP2010/070422
(87) Internationale Veröffentlichungsnummer: WO 2011/085931

(56) Entgegenhaltungen:
- WO-A1-2006/041336
- WO-A1-2009/136320
- US-A- 5 638 252

## Beschreibung

Es wird ein Varaktor nach dem Anspruch 1 angegeben.

Ein weit verbreitetes Problem von Varaktoren ist es, eine gute Durchstimmbarkeit im Hinblick auf die Dielektrizität zu erzielen.

Varaktoren sind spannungsabstimmbare Kondensatoren, bei denen die Kapazität von einer daran anliegenden Spannung abhängig ist, beziehungsweise die Kapazität durch eine Änderung der anliegenden Spannung verändert werden kann. Varaktoren finden beispielsweise Anwendung in Hochfrequenzschaltungen, bei denen eine elektrische Abstimmung stattfindet, wie beispielsweise in Filtern oder Phasenschiebern. Varaktoren können als Frequenz-Filter, beispielsweise für Funk- und Radiofrequenzen, welche elektrisch abgestimmt werden können, eingesetzt werden. Halbleiterdioden-Varaktoren weisen nur einen geringen Gütefaktor, eine niedrige Belastbarkeit und einen begrenzten Kapazitätsbereich auf. Ein ferroelektrischer Varaktor, bei dem die Kapazität beispielsweise durch Variieren der Dielektrizitätskonstante eines ferroelektrischen Materials mittels Änderung der Vorspannung abgestimmt wird, weist hingegen einen hohen Gütefaktor, eine hohe Belastbarkeit und gleichzeitig einen großen Kapazitätsbereich auf.

WO 2009/136320 A 1 offenbart ein elektronisches Gerät mit einem Betriebstemperaturbereich, wobei die elektronische Vorrichtung umfasst: einen abstimmbaren Kondensator mit einer ersten Elektrode (BE), einer zweiten Elektrode und einem zwischen der ersten Elektrode und der zweiten Elektrode angeordneten Dielektrikum, wobei das Dielektrikum ein dielektrischen Material mit einem Wert einer relativen Dielektrizitätskonstante ist, die zumindest innerhalb des Betriebstemperaturbereichs, und eine TemperaturRegeleinrichtung an den abstimmbaren Kondensator zum Bereitstellen einer Temperatur des Dielektrikums zum Bewirken einer vorgegebenen Kapazität des abstimmbaren Kondensators thermisch gekoppelt ist.Zudem wird ein Verfahren zur Herstellung deselektronischen Geräts offenbart.

Eine Aufgabe von Ausführungsformen der Erfindung besteht darin, einen Varaktor bereitzustellen, bei dem die Kapazität des Kondensatorbereichs auf unterschiedliche Weise verändert werden kann.

Die Aufgabe wird durch einen Varaktor nach dem Anspruch 1 gelöst. Weitere Ausführungsformen des Varaktors und Verfahren zu dessen Herstellung sind Gegenstand weiterer abhängiger Patentansprüche.

Eine Ausführungsform der Erfindung betrifft einen Varaktor umfassend die folgenden Bestandteile:
- einen ersten PTC-Bereich, welcher ein Keramikmaterial mit einem positiven Temperaturkoeffizienten bezüglich des Widerstandes umfasst, und
- einen Kondensatorbereich umfassend:
   - eine erste Elektrode,
   - eine zweite Elektrode,
   - eine erste dielektrische Schicht, welche zwischen der ersten Elektrode und der zweiten Elektrode angeordnet ist,
   wobei der erste PTC-Bereich und der Kondensatorbereich thermisch leitend miteinander verbunden sind, und die Kapazität des Kondensatorbereichs durch das Anlegen einer Vorspannung an:
   - den ersten PTC-Bereich,
   - den Kondensatorbereich,
   - den ersten PTC-Bereich und den Kondensatorbereich, veränderbar ist.

Bei einem solchen erfindungsgemäßen Varaktor ist es möglich, die Kapazität des Kondensatorbereiches auf unterschiedliche Art und Weise zu verändern. Die Vorspannung kann hierbei, wie auch bei den herkömmlichen Varaktoren, an den Kondensatorbereich angelegt werden. Bei Ausführungsformen der Erfindung ist es zusätzlich möglich, die Kapazität des Kondensatorbereiches auch durch das Anlegen einer Vorspannung an den PTC-Bereich zu verändern. Des Weiteren besteht die Möglichkeit, die Kapazität des Kondensators auch durch ein zeitgleiches Anlegen von jeweils einer unabhängigen Spannung sowohl an den PTC-Bereich wie auch an den Kondensatorbereich zu ändern. Somit ergeben sich also drei Möglichkeiten, die Kapazität des Kondensatorbereichs zu variieren.

Durch das Anlegen einer Vorspannung an den PTC-Bereich kann die Temperatur dieses Bereiches gesteuert werden. Dadurch, dass der PTC-Bereich thermisch leitend mit dem Kondensatorbereich und somit auch thermisch leitend mit der ersten dielektrischen Schicht verbunden ist, wird die im PTC-Bereich durch die Vorspannung erzeugte Wärme in die erste dielektrische Schicht übertragen. Durch die Temperaturänderung der ersten dielektrischen Schicht kann sich beispielsweise die Dielektrizitätskonstante der ersten dielektrischen Schicht ändern, was eine Veränderung der Kapazität des Kondensatorbereichs zur Folge hat.

In einer Ausführungsform der Erfindung ist der erste PTC-Bereich durch Anlegen einer Spannung auf eine Temperatur einstellbar, bei der die erste dielektrische Schicht eine maximale Durchstimmbarkeit im Hinblick auf die Dielektrizität aufweist.

Als Durchstimmbarkeit n ist hierbei der Unterschied der Dielektrizitätskonstanten zwischen der minimalen Vorspannung (ε_{Umin}), beispielsweise 0 V, und der maximalen Vorspannung (ε_{Umax}) zu verstehen. Je stärker also die Dielektrizitätskonstante ε der ersten dielektrischen Schicht durch das Anlegen einer Vorspannung beeinflusst werden kann, desto größer ist die Durchstimmbarkeit n im Hinblick auf die Dielektrizität. Hierbei ist es erstrebenswert, eine möglichst große Durchstimmbarkeit zu erzielen. Dadurch, dass bei einem erfindungsgemäßen Varaktor zwei separate Möglichkeiten bestehen, die Kapazität des Kondensatorbereiches zu verändern, welche zu einer dritten Möglichkeit kombiniert werden können, kann der Varaktor über einen sehr breiten Bereich durchgestimmt werden.

In einer weiteren Ausführungsform der Erfindung ist der erste PTC-Bereich durch Anlegen einer Spannung auf eine Temperatur einstellbar, bei der der dielektrische Verlust des Kondensatorbereiches einstellbar ist.

Ein weiteres Ziel neben der maximalen Durchstimmbarkeit ist es, auch den dielektrischen Verlust δ des Kondensatorbereiches einstellen zu können. Der dielektrische Verlust δ soll hierbei auf einen möglichst geringen Wert eingestellt werden.

In einer weiteren Ausführungsform der Erfindung ist der erste PTC-Bereich durch Anlegen einer Spannung auf eine Temperatur einstellbar, bei der der Varaktor einen möglichst hohen Gütefaktor aufweist.

Der Gütefaktor K, auch Q-Faktor genannt, ist ein Maß für bestimmte Eigenschaften eines schwingenden Systems, wie beispielsweise eines Schwingkreises. Der Gütefaktor beschreibt unter anderem das Verhältnis der Durchstimmbarkeit zum dielektrischen Verlust: K = (1-n)²/[(n • tanδ_{(Umax)} • tanδ_{(Umin)}], wobei n gegeben ist durch: n = ε_{Umin}/ε_{Umax}.

In einer weiteren Ausführungsform der Erfindung ist der erste PTC-Bereich auf der ersten Elektrode angeordnet.

Unter "angeordnet auf" ist im Zusammenhang mit dieser Erfindung zu verstehen, dass sich zwischen den beiden Schichten/Bereichen auch noch weitere Schichten/Bereiche befinden können. Die im ersten PTC-Bereich durch das Anlegen einer Vorspannung erzeugte Wärme kann hierbei über die erste Elektrode, welche beispielsweise aus einem Material gefertigt ist, welches über eine sehr große thermische Leitfähigkeit verfügt, auf die erste dielektrische Schicht übertragen werden. Die erste Elektrode kann hierfür beispielsweise ein Metall umfassen.

In einer Ausführungsform der Erfindung besteht der erste PTC-Bereich aus einem Keramikmaterial mit einem positiven Temperaturkoeffizienten bezüglich des Widerstandes, d.h. der gesamte erste PTC-Bereich wird durch das Keramikmaterial ausgebildet.

In einer weiteren Ausführungsform der Erfindung weist der erste PTC-Bereich einen Dotierstoff auf.

Bei dem Dotierstoff kann es sich beispielsweise um Pb, Ca, Sn, Zr, Sr, Bi, Hf oder eine Kombination dieser Ionen handeln. Durch die Dotierung des PTC-Bereiches mit diesen Elementen kann der Temperaturbereich, der durch das Anlegen der Vorspannung erreicht werden kann, variiert werden. Somit kann beispielsweise der Temperaturbereich durch die Dotierung erhöht werden, wodurch mehr Wärme erzeugt werden kann, welche auf den Kondensatorbereich bzw. die erste dielektrische Schicht übertragen werden kann.

Bei den Dotierstoffen kann es sich beispielsweise auch um Si, Al, B, Cu, Zn und Kombinationen dieser Elemente handeln. Durch eine Dotierung mit diesen Elementen kann beispielsweise das Sinterverhalten, wie das Schrumpfverhalten oder der thermische Ausdehnungskoeffizient, beeinflusst werden. Vorteilhafterweise ist das Sinterverhalten des ersten PTC-Bereiches hierbei auf das Sinterverhalten des Kondensatorbereiches abgestimmt.

Der erste PTC-Bereich kann des Weiteren auch mit Übergangsmetallen/Übergangsmetalloxiden oder Seltenerdmetallen/Seltenerdmetalloxiden und Kombinationen daraus dotiert sein.

Bei einer weiteren Ausführungsform der Erfindung umfasst der Varaktor zusätzlich eine erste Zwischenschicht, welche zwischen dem ersten PTC-Bereich und der ersten Elektrode angeordnet ist und die für die Dotierstoffe weitgehend undurchlässig ist.

Vorzugsweise ist die erste Zwischenschicht ganz undurchlässig für die Dotierstoffe. Dadurch, dass die Zwischenschicht weitgehend beziehungsweise ganz undurchlässig für die Dotierstoffe des ersten PTC-Bereichs ist, wird durch die erste Zwischenschicht sichergestellt, dass sowohl während des Sintervorgangs, wie auch während des Betrieb des Varaktors keine Dotierstoffe aus dem ersten PTC-Bereich in den Kondensatorbereich gelangen können. Somit wird die Funktionsfähigkeit des Kondensatorbereichs nicht durch die Dotierstoffe des ersten PTC-Bereichs gestört. Die erste Zwischenschicht kann hierbei beispielsweise Elemente aus der Gruppe 2A umfassen. Diese können beispielsweise als Oxide vorliegen. Die erste Zwischenschicht kann mit Übergangsmetallen dotiert sein. Die Übergangsmetalle können ebenfalls als Oxide vorliegen. Das Element aus der Gruppe 2A und das Übergangsmetall bilden vorzugsweise eine Verbindung mit Akzeptoreigenschaften aus.

In einer weiteren Ausführungsform der Erfindung umfasst der Varaktor zusätzlich eine zweite dielektrische Schicht, welche zwischen der ersten Zwischenschicht und der ersten Elektrode angeordnet ist.

Durch die zweite dielektrische Schicht findet eine größere räumliche Trennung zwischen dem Kondensatorbereich und der ersten Zwischenschicht statt. Hierdurch kann unter anderem sichergestellt werden, dass der PTC-Bereich und die Zwischenschicht keine störenden Einflüsse auf den Kondensatorbereich ausüben. Vorzugsweise weist die zweite dielektrische Schicht eine gute thermische Leitfähigkeit auf. Für die zweite dielektrische Schicht kann beispielsweise das gleiche Material verwendet werden wie für die erste dielektrische Schicht. Vorzugsweise weist die zweite dielektrische Schicht ein ähnliches Sinterverhalten wie die erste dielektrische Schicht auf.

In einer weiteren Ausführungsform der Erfindung umfasst der Varaktor zusätzlich einen zweiten PTC-Bereich, welcher mit dem Kondensatorbereich thermisch leitend verbunden ist.

Die zuvor und auch im Folgenden für den ersten PTC-Bereich, beispielsweise im Hinblick auf das Material oder auch im Hinblick auf die räumliche Anordnung, ausgeführten Vorteile gelten entsprechend analog auch für den zweiten PTC-Bereich.

In einer weiteren Ausführungsform der Erfindung umfasst der Varaktor zusätzlich eine zweite Zwischenschicht, welche zwischen dem zweiten PTC-Bereich und der zweiten Elektrode angeordnet ist. Diese zweite Zwischenschicht ist entsprechend für die Dotierstoffe des zweiten PTC-Bereichs weitgehend undurchlässig.

In einer weiteren Ausführungsform der Erfindung umfasst der Varaktor zusätzlich eine dritte dielektrische Schicht, welche zwischen der zweiten Zwischenschicht und der zweiten Elektrode ausgeordnet ist.

Für die dritte dielektrische Schicht gelten entsprechend vorteilhafte Ausgestaltungen, wie sie im Zusammenhang mit der zweiten dielektrischen Schicht angeführt wurden.

In einer weiteren Ausführungsform der Erfindung bilden der erste PTC-Bereich, der zweite PTC-Bereich und der Kondensatorbereich einen Schichtstapel aus, und der erste PTC-Bereich und der zweite PTC-Bereich sind an zwei sich gegenüberliegenden Seiten des Kondensatorbereiches angeordnet. Der Schichtstapel umfasst vorteilhafterweise übereinandergelegte keramische Folien, wobei die obersten und auch untersten Folien Bestandteile des ersten und zweiten Kondensatorbereichs sind.

Hierdurch ist es möglich, den Kondensatorbereichen von zwei gegenüberliegenden Seiten mit Wärme zu versorgen. Somit kann der Kondensatorbereich gleichmäßiger aufgeheizt werden.

In einer weiteren Ausführungsform der Erfindung weist der erste PTC-Bereich eine elektrische Kontaktierung auf.

Unter der elektrischen Kontaktierung ist hierbei nicht die erste Elektrode des Kondensatorbereichs zu verstehen. Über die elektrische Kontaktierung, beispielsweise eine externe Elektrode, kann Spannung an den ersten PTC-Bereich angelegt werden, ohne dass Spannung an den Kondensatorbereich angelegt wird. Hierdurch kann der erste PTC-Bereich unabhängig von dem Kondensatorbereich mit Spannung versorgt werden.

In einer weiteren Ausführungsform weist der zweite PTC-Bereich eine elektrische Kontaktierung auf.

Für diese gilt Entsprechendes, was zuvor im Zusammenhang mit dem ersten PTC-Bereich und dessen Kontaktierung ausgeführt wurde, wobei diese Kontaktierung aber separat von der Kontaktierung des ersten PTC-Bereichs ausgeformt sein kann.

In einer weiteren Ausführungsform weist die erste dielektrische Schicht neben der ersten und der zweiten Elektrode eine zusätzlich elektrische Kontaktierung auf.

Hierbei kann es sich beispielsweise um eine externe Elektrode handeln. Über diese kann Spannung an die erste dielektrische Schicht angelegt werden, welche unabhängig von der Betriebsspannung des Kondensatorbereiches ist. Durch das Anlegen der Spannung über diese elektrische Kontaktierung kann beispielsweise die Dielektrizität der ersten dielektrischen Schicht durchgestimmt werden.

In einer weiteren Ausführungsform der Erfindung umfasst der erste PTC-Bereich Ba₁₋ₓSrₓTi_{1-y}Zr_{y}O₃, wobei gilt: 0 < x < 1; 0 ≤ y < 1.

Entsprechend der vorangegangenen Ausführungen kann der erste PTC-Bereich zusätzlich Dotierstoffe aufweisen.

In einer weiteren Ausführungsform umfasst der zweite PTC-Bereich Ba₁₋ₓSrₓTi_{1-y}Zr_{y}O₃, wobei gilt: 0 < x < 1; 0 ≤ y < 1.

Für die Dotierstoffe des zweiten PTC-Bereichs gilt das Entsprechende, was zuvor zum ersten PTC-Bereich ausgeführt wurde.

In einer weiteren Ausführungsform umfasst die erste dielektrische Schicht Ba₁₋ₓSrₓTi_{1-y}Zr_{y}O₃, wobei gilt: 0 < x < 1; 0 ≤ y < 1.

Bei Bariumtitanat beziehungsweise deren entsprechenden dotierten Varianten kann es sich um Ferroelektrika handeln. Als Ferroelektrika bezeichnet man eine Klasse von Materialien, die auch ohne äußeres angelegtes Feld eine Polarisation besitzen. Die Eigenschaft der Ferroelektrizität verschwindet oberhalb einer charakteristischen Temperatur, der Curie-Temperatur. Diesen Übergang bezeichnet man als Phasenübergang. Oberhalb dieser Temperatur verschwindet die Polarisation und man bezeichnet die Substanz dann als Paraelektrika. Im ferroelektrischen Zustand sind die Zentren positiver und negativer Ladung, beispielsweise die Anionen und Kationen, relativ zu einander verschoben. Im Falle des Bariumtitanats ist beispielsweise das Ti⁴⁺ relativ zu den Sauerstoffionen O²⁻ verschoben. Oberhalb von 120 °C verschwindet die Ferroelektrizität von Bariumtitanat und dieses verhält sich wie ein paraelektrisches Dielektrikum.

Bei Bariumstrontiumtitanat (BST) findet ein Phasenübergang von der tetragonalen, ferroelektrischen Phase zur kubischen, paraelektrischen Phase im Bereich der Curie-Temperatur T_{C} statt. Die genaue Curie-Temperatur T_{C} ist hierbei von der genauen Zusammensetzung, also der Dotierung, des Bariumstrontiumtitanats abhängig.

In einer weiteren Ausführungsform der Erfindung umfasst die erste dielektrische Schicht einen der folgenden Ionen oder Kombination daraus: Pb, Ca, Sn, Zr, Sr, Bi, Hf.

Durch die Dotierung der ersten dielektrischen Schicht kann die Curie-Temperatur T_{C}, bei der der Phasenübergang eintritt, verschoben werden. Die Curie-Temperatur T_{C} kann hierdurch in einen Temperaturbereich verschoben werden, der in der ersten dielektrischen Schicht durch die Wärmezufuhr aus dem PTC-Bereich erreicht wird. Somit kann durch ein Anlegen der Vorspannung an den PTC-Bereich und die hieraus resultierende Wärme, welche auf die erste elektrische Schicht übertragen wird, in dieser eine Phasenumwandlung bewirkt werden. Über die Phasenumwandlung können die ferroelektrischen beziehungsweise paraelektrischen Eigenschaften wie beispielsweise die Dielektrizitätskonstante ε der ersten dielektrischen Schicht verändert werden.

In einer weiteren Ausführungsform der Erfindung umfasst die erste dielektrische Schicht einen der folgenden Dotierstoffe beziehungsweise Kombinationen daraus: Ni, Al, Mg, Fe, Cr, Mn.

Durch die Dotierung der ersten dielektrischen Schicht mit diesen Dotierstoffen kann der dielektrische Verlust des Kondensatorbereiches reduziert werden.

In einer weiteren Ausführungsform der Erfindung umfasst die erste dielektrische Schicht einen der folgenden Dotierstoffe beziehungsweise Kombinationen daraus: Si, Al, B, Cu, Zn. Durch eine Dotierung der ersten dielektrischen Schicht mit diesen Dotierstoffen kann das Sinterverhalten, wie beispielsweise das Schrumpfverhalten oder der thermische Ausdehnungskoeffizient, der ersten dielektrischen Schicht beeinflusst werden. Vorzugsweise weisen alle dielektrischen Schichten des Varaktors ein vergleichbares Sinterverhalten auf.

Die erste dielektrische Schicht kann auch aus einer Mischung von unterschiedlichen keramischen Phasen bestehen, nämlich beispielsweise aus einer Perovskitphase und einer weiteren dielektrischen Keramik mit einer geringeren Dielektrizitätskonstante, wie beispielsweise Zirkonate, Silikate, Titanate, Aluminate, Stanate, Niobate, Tantalate oder Seltenerdmetalloxiden. Des Weiteren kann die erste dielektrische Schicht Elemente aus der Gruppe 1A und 2A umfassen. Die erste dielektrische Schicht kann auch die folgenden Elemente beziehungsweise deren Oxide umfassen: Ti, V, Cr, Mn, Zr, Nb, Mo, Hf, Ta und W. Die erste dielektrische Schicht kann Elemente oder Oxide der Seltenerdmetalle, wie beispielsweise Sc, Y, La, Ce, Pr und Nd sowie Mischungen daraus umfassen.

Ausführungen, welche im Zusammenhang mit der ersten dielektrischen Schicht in Bezug auf das Sinterverhalten gemacht wurden, treffen in analoger Weise auch auf weitere dielektrische Schichten des Varaktors zu.

In einer weiteren Ausführungsform umfasst die zweite und/oder dritte dielektrische Schicht Ba₁₋ₓSrₓTi_{1-y}Zr_{y}O₃, wobei gilt: 0 < x < 1; 0 ≤ y < 1.

Ausführungen, die zuvor im Bezug auf die Dotierung im Zusammenhang mit der ersten dielektrischen Schicht gemacht wurden, treffen in analoger Weise auch auf die zweite beziehungsweise dritte dielektrische Schicht zu.

In einer weiteren Ausführungsform der Erfindung weist der Varaktor in Bezug auf die erste dielektrische Schicht einen symmetrischen Aufbau auf.

Dies bedeutet insbesondere, dass alle Schichten, welche auf die erste Elektrode folgen, in der entsprechenden Abfolge auch auf die zweite Elektrode folgen. Vorzugsweise weisen die korrespondierenden Schichten jeweils entsprechende gleiche Schichtdicke, sowie die gleichen Außenmaße auf. Vorzugsweise weisen die entsprechenden Schichten jeweils die gleiche Zusammensetzung auf. Somit lassen sich bezüglich der Symmetrieebene, welche durch die erste dielektrische Schicht verläuft, alle auf der einen Seite der ersten dielektrischen Schicht befindlichen Schichten auch auf die auf die anderen gegenüberliegende Seite überführen. Die in Bezug auf die erste Seite diskutierten Vorteile gelten entsprechend auch für die gegenüberliegende Seite.

Durch den symmetrischen Aufbau des Varaktors kann gewährleistet werden, dass die erste dielektrische Schicht von beiden Seiten gleich, also in gleicher Stärke und mit gleicher Wärmeverteilung über die anliegenden Flächen, erwärmt wird. Somit wird ein Temperaturgefälle in der ersten dielektrischen Schicht von der einen zur anderen Elektrode vermieden, und der durch die Erwärmung der ersten dielektrischen Schicht auftretende Durchstimm-Effekt tritt somit auch symmetrisch in dieser auf.

In einer weiteren Ausführungsform der Erfindung ist der Varaktor als oberflächenmontierbares Bauelement (SMD) ausgeformt.

In einer weiteren Ausführungsform der Erfindung ist der Varaktor thermisch gegenüber der Umgebung isoliert. Dies kann beispielsweise mittels eines Materials geschehen, welches eine niedrige thermische Leitfähigkeit aufweist. Der Varaktor kann beispielsweise mit diesem Material ummantelt sein. Hierdurch wird sichergestellt, dass die Wärme, welche durch das Anlegen der Vorspannung im ersten PTC-Bereich erzeugt wird, überwiegend an den Kondensatorbereich weitergegeben wird, und nur zu einem geringen Anteil an die Umgebung.

In einer Ausführungsform beträgt die Schichtdicke der ersten dielektrischen Schicht, welche zwischen der ersten Elektrode und der zweiten Elektrode angeordnet ist 14,5 µm.

In einer Ausführungsform ist die erste Elektrode und die zweite Elektrode jeweils aus Pd.

Neben dem Varaktor wird auch ein Verfahren zur Herstellung des Varaktors beansprucht.

In einer Variante des Verfahrens zur Herstellung eines zuvor beschriebenen Varaktors umfasst das Verfahren die Verfahrensschritte:
A) Ausformen eines Schichtenstapels umfassend mindestens die Schichten:
   - erster PTC-Bereich,
   - erste Elektrode,
   - erste dielektrische Schicht,
   - zweite Elektrode,
B) Sintern des Schichtenstapes aus A), so dass ein Varaktor ausgebildet wird, bei dem sich die Kapazität des Kondensatorbereichs durch das Anlegen einer Vorspannung an den ersten PTC-Bereich, den Kondensatorbereich oder den ersten PTC-Bereich und den Kondensatorbereich, verändern lässt.

Über ein solches Verfahren kann beispielsweise ein wie zuvor beschriebener Varaktor hergestellt werden. Für die entsprechenden Schichten/Bereiche können jene Materialien verwendet werden, wie sie zuvor im Zusammenhang mit dem Varaktor erläutert wurden.

In einer weiteren Variante des Verfahrens wird im Verfahrensschritt A) ein erster PCT-Bereich erzeugt, der Dotierstoffe umfasst, und eine erste Zwischenschicht ausgeformt, welche zwischen dem ersten PTC-Bereich und der ersten Elektrode angeordnet ist, und für die Dotierstoffe weitgehend undurchlässig ist.

Vorzugsweise ist die erste Zwischenschicht ganz für Ionen undurchlässig. Durch das Ausbilden ein solchen Zwischenschicht im Verfahrenschritt A) kann sowohl im folgenden Verfahrensschritt B), dem Sintern, wie auch im Betrieb des Varaktors einen Wanderung von Dotierstoffen beispielsweise aus dem ersten PTC-Bereich in die erste dielektrische Schicht unterbunden werden. Hierdurch wird vermieden, dass beispielsweise Dotierstoffe in den Kondensatorbereich gelangen und dort die Funktionsfähigkeit des Kondensatorbereichs beeinträchtigen.

Der Schichtenstapel im Verfahrensschritt A) kann neben dem bereits angeführten Schichten jede weitere zuvor im Zusammenhang mit dem Varaktor beschriebene Schicht zusätzlich umfassen.

Den keramischen Schichten kann zur Herabsetzung der Sintertemperatur ein Sinterhilfsmittel, wie beispielsweise eine Glasphase, zugesetzt werden. Hierdurch kann ein komplexes Keramiksystem ausgebildet werden, welches bereits bei niedrigen Temperaturen gesintert, und auch gemeinsam mit beispielsweise niedrig schmelzenden Elektroden gesintert werden kann. Ein solches Keramiksystem wird auch als LTCC (low temperature co-fired ceramic) bezeichnet.

In einer Variante des Verfahrens liegt die Sintertemperatur in einem Bereich von 800 °C bis 1600 °C.

In einer weiteren Variante des Verfahrens wird in einem zusätzlichen Verfahrensschritt eine elektrische Kontaktierung auf den ersten PTC-Bereich aufgebracht.

In einer weiteren Variante des Verfahrens umfasst der Schichtenstapel im Verfahrensschritt A) zusätzlich einen zweiten PTC-Bereich.

In einer weiteren Variante des Verfahrens wird in einem zusätzlichen Verfahrensschritt eine elektrische Kontaktierung auf den zweiten PTC-Bereich aufgebracht.

Das Aufbringen der elektrischen Kontaktierung kann beispielsweise mittels Sputtern oder Screen-print oder einer anderen Abscheidetechnik erfolgen.

Für die erste Elektrode und die zweite Elektrode kann beispielsweise Pd verwendet werden.

In einer anderen Variante eines Herstellungsverfahrens werden die einzelnen Schichten/Bereiche gesintert, bevor sie zu einem Schichtenstapel zusammengefügt werden. Das Zusammenfügen kann beispielsweise mittels eines Haftmittels erfolgen. Das Haftmittel kann beispielsweise ein Epoxyd umfassen.

Im Folgenden sollen Varianten der Erfindung anhand von Figuren und Ausführungsbeispielen näher erläutert werden.
- Figur 1: zeigt einen schematischen Querschnitt durch eine erste Ausführungsform eines erfindungsgemäßen Varaktors.
- Figur 2: zeigt einen schematischen Querschnitt durch eine Ausführungsform eines erfindungsgemäßen Varaktors, welche in Bezug auf die erste dielektrische Schicht einen symmetrischen Aufbau aufweist.
- Figur 3: zeigt einen schematischen Querschnitt durch eine Ausführungsform eines erfindungsgemäßen Varaktors, welche an den beiden PTC-Bereichen jeweils elektrische Kontaktierungen aufweist.
- Figur 4: zeigt einen schematischen Querschnitt durch eine Ausführungsform eines erfindungsgemäßen Varaktors, welche an der ersten dielektrischen Schicht zusätzliche elektrische Kontaktierungen aufweist.
- Figur 5: zeigt den Verlauf der Dielektrizitätskonstante ε und den dielektrischen Verlust tan δ in Abhängigkeit von der Vorspannung, die am PTC-Bereich angelegt ist.
- Figur 6: zeigt den Verlauf der Kapazität und der Dielektrizitätskonstante ε aufgetragen gegen die Vorspannung an der ersten dielektrischen Schicht in Abhängigkeit von unterschiedlichen am PTC-Bereich angelegten Vorspannungen.
- Figur 7: zeigt die Durchstimmbarkeit aufgetragen gegen die Vorspannung an der ersten dielektrischen Schicht für unterschiedliche Vorspannungen am PTC-Bereich.
- Figur 8: zeigt den Gütefaktor K aufgetragen gegen die Vorspannung am PTC-Bereich.
- Figur 9: zeigt den Gütefaktor K aufgetragen gegen die Vorspannung an der ersten dielektrischen Schicht für unterschiedliche Vorspannungen am PTC-Bereich.
- Figur 10: zeigt die Durchstimmbarkeit aufgetragen gegen die Vorspannung für unterschiedliche Temperaturen.

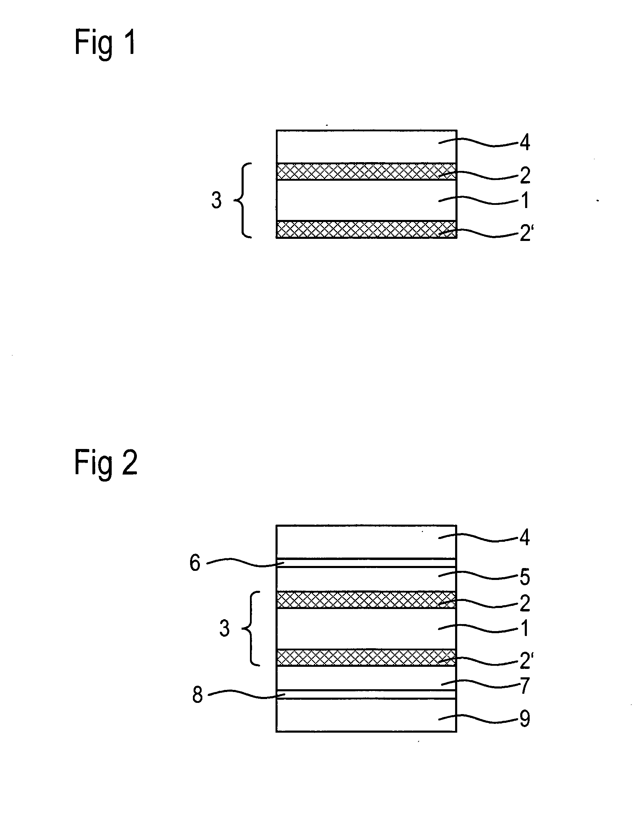

Die Figur 1 zeigt im schematischen Querschnitt ein Ausführungsbeispiel eines erfindungsgemäßen Varaktors. Dieses umfasst einen Kondensatorbereich 3, welcher eine erste dielektrische Schicht 1 umfasst, auf deren Oberseite eine erste Elektrode 2 und auf deren Unterseite eine zweite Elektrode 2' angeordnet ist. Auf der ersten Elektrode 2 ist ein erster PTC-Bereich 4 angeordnet. Durch das Anlegen einer Vorspannung an den ersten PTC-Bereich 4 wird in diesem Wärme erzeugt, welche über die erste Elektrode 2 zur ersten dielektrischen Schicht 1 weitergeleitet wird. Durch die Wärmezufuhr in die ersten dielektrischen Schicht 1 kann die Kapazität des Kondensatorbereichs 3 verändert werden.

Figur 2 zeigt im schematischen Querschnitt ein weiteres Ausführungsbeispiel eines Varaktors, welches in Bezug auf die erste dielektrische Schicht 1 einen symmetrischen Aufbau aufweist. Der Varaktor umfasst hierbei die folgenden Schichten/Bereiche: Einen zweiten PTC-Bereich 9, eine zweite Zwischenschicht 8, eine dritte dielektrische Schicht 7, eine zweite Elektrode 2', eine erste dielektrische Schicht 1, eine erste Elektrode 2, eine zweite dielektrische Schicht 5, eine erste Zwischenschicht 6 und einen ersten PTC-Bereich 4. Hierbei bilden die erste dielektrische Schicht 1, die erste Elektrode 2 und die zweite Elektrode 2' den Kondensatorbereich 3 aus. An den ersten PTC-Bereich 4 und einen zweiten PTC-Bereich 9 können nun jeweils eine Vorspannung angelegt werden, wodurch von diesen beiden PTC-Bereichen jeweils Wärme in Richtung erster dielektrischer Schicht 1 abgegeben wird. Die erste Zwischenschicht 6 beziehungsweise die zweite Zwischenschicht 8 verhindern jeweils, dass aus den angrenzenden PTC-Bereichen Dotierstoffe in Richtung zweite dielektrische Schicht 5 beziehungsweise dritte dielektrische Schicht 7 wandern. Hierdurch wird sichergestellt, dass keine Dotierstoffe in den Kondensatorbereich 3 gelangen und die Funktionsfähigkeit des Kondensatorbereichs 3 herabsetzt wird. Durch den symmetrischen Aufbau des Varaktors in Bezug auf die erste dielektrische Schicht 1 wird sichergestellt, dass die erste dielektrische Schicht 1 sowohl von der Oberseite als auch von der Unterseite im gleichen Maße erwärmt werden kann.

Im Folgenden soll nun ein erstes konkretes Ausführungsbeispiel näher beschrieben werden. Dieses weist den Aufbau auf, wie er in Figur 2 schematisch dargestellt ist. Der erste PTC-Bereich 4 und der zweite PTC-Bereich 9 werden hierbei jeweils durch 25 Schichten aus Ba_{0,75}Sr_{0,25}TiO₃ (BST) gebildet. Das BST ist hierbei mit 0,3 at-% Nb und 0,05 at-% Mn dotiert. Die erste Zwischenschicht 6 und die zweite Zwischenschicht 8 werden jeweils von einer Schicht MgO gebildet, welche mit 1 gew-% TiO₂ dotiert ist, wodurch ein Magnesiumtitanat (MT) vorliegt. Die zweite dielektrische Schicht 5 sowie die dritte dielektrische Schicht 7 werden jeweils von 23 Lagen Ba_{0,75}Sr_{0,25}TiO₃ gebildet. Der Kondensatorbereich 3 umfasst zwei Schichten Ba_{0,75}Sr_{0,25}TiO₃, bei denen die Oberseite der ersten Schicht beziehungsweise die Unterseite der zweiten Schicht mit Pd-Elektroden versehen sind, die die erste Elektrode 2 beziehungsweise die zweite Elektrode 2' ausbilden. Die undotierten Schichten von BST weisen hierbei eine Schichtdicke von 20 µm auf, die dotierten BST-Schichten eine Schichtdicke von 35 µm. Die Zwischenschichten weisen jeweils eine Schichtdicke von 200 µm auf. Die einzelnen Schichten/Bereiche weisen jeweils eine Grundfläche von 10 x 10 cm auf.

Ein solcher Varaktor kann beispielsweise durch Sintern der entsprechenden Grünteile für zwei Stunden bei 1350 °C erhalten werden.

Die erste Zwischenschicht und die zweite Zwischenschicht, welche jeweils aus MgO bestehen, welches mit 1 gew-% TiO₂ dotiert wurde (MT), weisen mehrere vorteilhafte Funktionen auf. Zum einen erlauben die Zwischenschichten, dass die dotierten Schichten/Bereiche und die nicht dotierten dielektrischen Schichten gemeinsam gesintert werden können. Bei einem Vergleichsversuch ohne die Zwischenschichten konnte festgestellt werden, dass die Dotierstoffe aus den PTC-Bereichen während des Sinterprozesses in die dielektrischen Schichten gewandert sind. Hierdurch wurden die dielektrischen Schichten elektrisch leitfähig, was die Funktionsfähigkeit des Varaktors deutlich beeinträchtigt hat. In diesem Ausführungsbeispiel fungieren die MT-Schichten sowohl als physikalische Diffusionsbarriere, wie auch als chemische Barriere, da Mg²⁺ als Akzeptor agiert. Als Akzeptor kann Mg²⁺ den Donoreffekt der Dotierstoffe des BST kompensieren. Ein weiterer positiver Effekt, welcher von den Erfindern erkannt wurde, ist, dass während des Sinterprozesses Mg²⁺-Ionen in die dielektrischen Schichten wandern, und dort ebenfalls einen Akzeptoreffekt haben. Dieser Akzeptoreffekt vermindert den dielektrischen Verlust des Kondensatorbereichs. Als dritten positiven Effekt haben die Erfinder festgestellt, dass die Anwesenheit von Mg²⁺ während des Sinterprozesses die Anzahl der Sauerstoffleerstellen reduziert wird. Hierdurch wird das Korngrößenwachstum beschränkt, sodass die Korngröße das gewünschte Maß nicht überschreitet. Vergleichsmessungen ohne die Zwischenschichten, welche Mg²⁺ umfassen, haben gezeigt, dass hierbei die Korngröße über einen Wert von 100 µm hinaus wächst, wodurch die Dielektrizitätskonstante ε vermindert und der dielektrische Verlust δ erhöht wird.

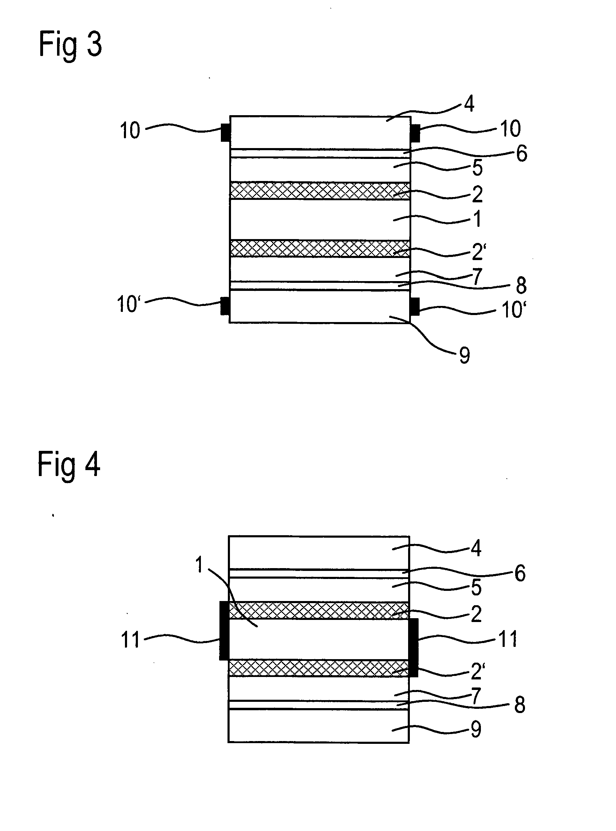

Figur 3 zeigt im schematischen Querschnitt ein weiteres Ausführungsbeispiel eines Varaktors, welches der aus Figur 2 entspricht und zusätzlich auf dem ersten PTC-Bereich 4 und dem zweiten PTC-Bereich 9 elektrische Kontaktierungen 10 / 10' aufweist. Die elektrischen Kontaktierungen 10 und 10' sind als externe Elektroden ausgeformt. Über die elektrischen Kontaktierungen 10 kann eine Spannung an den ersten PTC-Bereich 4 angelegt werden, über die elektrischen Kontaktierungen 10' eine hiervon unabhängige Spannung an den zweiten PTC-Bereich 9. Figur 4 zeigt im schematischen Querschnitt ein weiteres Ausführungsbeispiel eines Varaktors, welches der aus Figur 2 entspricht und zusätzlich elektrische Kontaktierungen 11 umfasst. Diese sind auf der ersten dielektrischen Schicht 1, der ersten Elektrode 2 und der zweiten Elektrode 2' angeordnet. Die elektrischen Kontaktierungen 11 sind hierbei elektrisch leitend mit diesen drei Schichten verbunden. Über die elektrischen Kontaktierungen 11 kann somit direkt an die erste dielektrische Schicht 1 eine Spannung angelegt werden, und indirekt über die erste Elektrode 2 und die zweite Elektrode 2'. Über die elektrischen Kontaktierungen 11 kann zum einen die Spannung angelegt werden, mit der der Varaktor betrieben wird, hierbei kann es sich beispielsweise um Wechselspannung handeln, wie auch die Vorspannung mit der die erste dielektrische Schicht 1 durchgestimmt werden kann, hierbei kann es sich beispielsweise um Gleichspannung handeln.

An den Seitenflächen reichen die erste Elektrode 2 und die zweite Elektrode 2' jeweils bis nach außen und können somit über die Außenflächen kontaktiert werden. An der Vorder- und Rückseite sind die erste Elektrode 2 und die zweite Elektrode 2' bei einem Ausführungsbeispiel über das BST-Material nach außen hin elektrisch isoliert.

Weiterhin ist es möglich, dass in einer weiteren Ausführungsform eines erfindungsgemäßen Varaktors sowohl elektrische Kontaktierungen 11 zur Kontaktierung des Kondensatorbereichs 3 als auch separate Kontaktierungen 10 und 10' zur Kontaktierung des ersten PTC-Bereichs 4 bzw. zweiten PTC-Bereichs 9 vorhanden sind.

Im Folgenden soll nun ein zweites konkretes Ausführungsbeispiel näher beschrieben werden. Dieses weist eine Schichtenfolge auf, wie sie im Zusammenhang mit dem ersten konkreten Ausführungsbeispiel beschrieben wurde. Des Weiteren weist dieses Ausführungsbeispiel elektrische Kontaktierungen 10, welche Ni umfassen, am ersten PTC-Bereich 4 auf, sowie elektrische Kontaktierungen 10', welche ebenfalls Ni umfassen, am zweiten PTC-Bereich 9 auf. Die elektrischen Kontaktierungen 10 und 10' befinden sich sowohl auf der Vorderseite des Varaktors, sowie auf dessen Rückseite. Die elektrischen Kontaktierungen 10 und 10', welcher auf der gleichen Seite angeordnet sind, sind elektrisch leitend miteinander verbunden, so dass an beide elektrische Kontaktierungen 10 und 10' die gleiche Vorspannung an den ersten PTC-Bereich 4 und den zweiten PTC-Bereich 9 angelegt werden kann. Der Widerstand des Varaktors wurde zwischen den beiden Ni-Elektroden mit < 300 Ω gemessen.

Das zweite konkrete Ausführungsbeispiel weist des Weiteren zwei elektrische Kontaktierungen 11 auf. In diesem Ausführungsbeispiel ragen die erste Elektrode 2 und die zweite Elektrode 2' nur an den Seitenflächen bis nach Außen. Die elektrische Kontaktierungen 11, welche in diesem Fall Ag umfassen, sind somit elektrisch leitend sowohl mit der ersten dielektrischen Schicht 1, wie auch mit der ersten Elektrode 2 und der zweiten Elektrode 2' verbunden. Die beiden elektrischen Kontaktierungen 11 befinden sich jeweils auf einer der beiden Seitenflächen. Über die elektrischen Kontaktierungen 11 kann zum einen die Spannung angelegt werden, mit der der Varaktor betrieben wird, hierbei kann es sich beispielsweise um Wechselspannung handeln, wie auch die Vorspannung mit der die erste dielektrische Schicht 1 durchgestimmt werden kann, hierbei kann es sich beispielsweise um Gleichspannung handeln. Durch die Kombination von Wechsel- und Gleichspannung kann die Vorspannung an der ersten dielektrischen Schicht 1 hierbei unabhängig von der Betriebsspannung des Kondensatorbereiches 3 angelegt werden.

Die als externen Elektroden ausgeformten elektrischen Kontaktierungen 10 und 10' können beispielsweise durch das Aufdrucken von Ni-Paste, welche anschließend gebrannt wird, aufgebracht werden. Die elektrischen Kontaktierungen 11 können ebenfalls durch das Aufdrucken von Metallpaste und anschließendem Glühen aufgebracht werden.

Ein solches Ausführungsbeispiel, wie es als zweites konkretes Ausführungsbeispiel beschrieben wurde, wurde zu Messung herangezogen. Die Messung erfolgt mit einem Agilent 4294A Präzisions-Widerstands-Analysator in einem Frequenzbereich von 1 bis 500 kHz. Die maximale Dielektrizität von Ba_{0,75}Sr_{0,25}TiO₃ wurde in einen Temperaturbereich von 50 bis 51 °C erreicht. Dieser Temperaturbereich wurde in der ersten dielektrischen Schicht 1 dadurch ereicht, dass an den PTC-Bereichen 4 und 9 eine Vorspannung zwischen 10,5 und 8 V angelegt wurde. Der Strom betrug hierbei weniger als 10 mA. Die Temperaturen, die für die dielektrische Schicht 1 erreicht werden konnten, lagen im Bereich von Raumtemperatur bis über 200 °C.

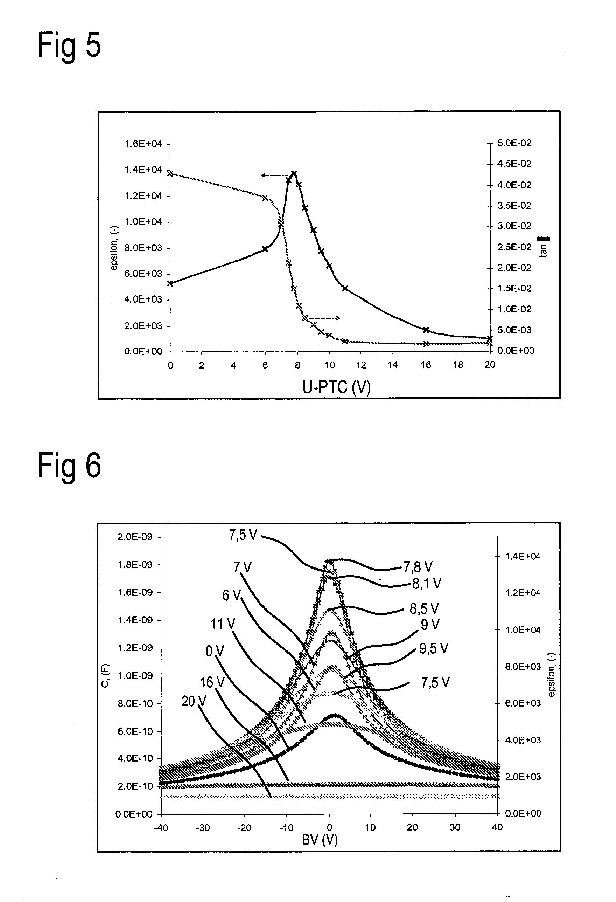

Die Ergebnisse weiterer Messungen, welche mit diesem zweiten konkreten Ausführungsbeispiel durchgeführt wurden, sind in den folgenden Figuren 5 bis 10 dargestellt.

In Figur 5 ist die Dielektrizitätskonstante ε sowie die dielektrische Verlust tan δ jeweils gegen die Vorspannung, welche an dem PTC-Bereich angelegt wurde (U-PTC), aufgetragen. Die beiden Pfeile in der Figur zeigen an, welcher der beiden Kurven zu welcher Y-Achse gehört. Die Kurve der Dielektrizitätskonstante ε weist hierbei im Bereich von etwa 8 V ein Maximum auf, nach welchem die Kurve zu höheren Spannungen hin steil abfällt. Die Kurve für den dielektrischen Verlust tan δ fällt in den Bereich 0 bis 6 V erst leicht, dann in den Bereich zwischen 6 und 9 V sehr steil ab. Für Spannungen größer 9 V fällt die Kurve nur noch leicht, beziehungsweise bei Werten von größer 12 V so gut wie nicht mehr ab.

Figur 6 zeigt die Kurven der Kapazität C beziehungsweise der Dielektrizitätskonstante ε, welche jeweils gegen die Vorspannung an der ersten dielektrischen Schicht (BV) aufgetragen sind. Die Messung wurde für jeweils unterschiedliche Vorspannungen an den PTC-Bereichen (U-PTC) durchgeführt. Für jede PTC-Bereich-Vorspannung ist somit eine Kurve dargestellt. Die jeweilige PTC-Bereich-Vorspannung, variiert von 0 bis 20 V ist an der jeweiligen Kurve in Volt angegeben. Für jede dieser PTC-Bereich-Vorspannungen wurde die Vorspannung an der ersten dielektrischen Schicht (BV) in einen Bereich von -40 V bis 40 V durchgefahren. Die besten Ergebnisse wurden für eine PTC-Bereich-Vorspannung (U-PTC) für die Werte 7,8 V, 7,5 V und 8,1 V erreicht. Bei diesen PTC-Bereich-Vorspannungen wurden die höchsten Dielektrizitätskonstanten ε gemessen.

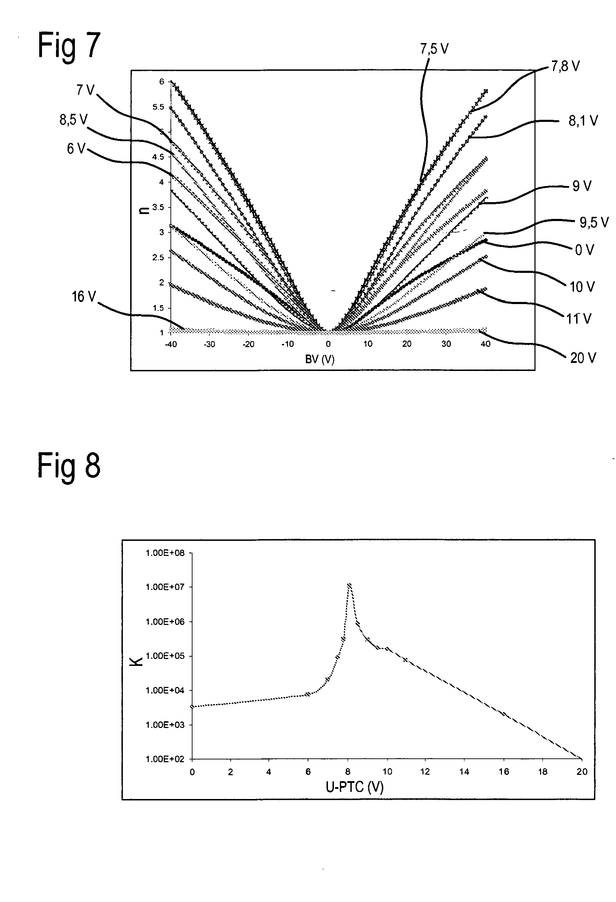

Die Figur 7 zeigt die Durchstimmbarkeit n aufgetragen gegen die Vorspannung, welche an die erste dielektrische Schicht (BV) angelegt wurde. Die Durchstimmbarkeit n wurde hierbei für unterschiedliche PTC-Bereich-Vorspannungen gemessen. Die unterschiedlichen PTC-Bereich-Vorspannungen sind an den jeweiligen Kurven in Volt angegeben. Die höchste Durchstimmbarkeit n wurde hierbei für eine PTC-Bereich-Vorspannung von 7,8 V und 7,5 V erreicht. Für diese PTC-Bereich-Vorspannungen wurden auch in der Messreihe, die in Figur 6 dargestellt ist, die besten Messergebnisse erzielt. Der Maximalwert, der für die Durchstimmbarkeit n erreicht wurde ist 6,02, was einer relativen Durchstimmbarkeit von 83,3 % entspricht. Dieser Wert wurde bei einer PTC-Bereich-Vorspannung von 7,5 V und einer Vorspannung an der ersten dielektrischen Schicht (BV) von -40 bzw. +40 V erreicht, was 2,75 V/µm entspricht.

Figur 8 zeigt den Gütefaktor K aufgetragen gegen die PTC-Bereich-Vorspannung (U-PTC). Die Vorspannung an der ersten dielektrischen Schicht wurde bei dieser Messung konstant auf 40 V gehalten. Das Maximum des Gütefaktors K wurde für eine PTC-Bereich-Vorspannung von 8,1 V erreicht. Dies ist eine Folge unter anderem des in den Bereich zwischen 6 und 8 V stark abfallenden dielektrischen Verlustes δ, wie er in Figur 5 dargestellt ist.

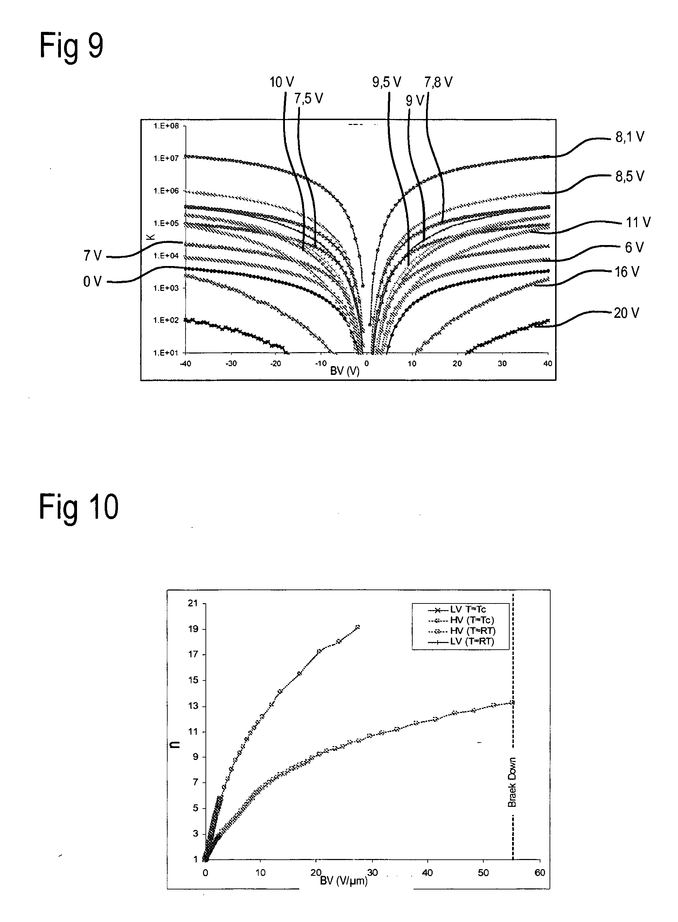

Figur 9 zeigt den Gütefaktor K aufgetragen gegen die Vorspannung an der ersten dielektrischen Schicht (BV). Die Messungen wurden für unterschiedliche PTC-Bereich-Vorspannungen durchgeführt, welche an den jeweiligen Kurven in Volt angegeben sind. Der höchste Gütefaktor K wurde für eine PTC-Bereich-Vorspannung von 8,1 V erzielt.

In Figur 10 ist die Durchstimmbarkeit n gegen die Vorspannung an der ersten dielektrischen Schicht (BV) aufgetragen. Hierbei wurde die Vorspannung bis zum Zusammenbruch (break down) erhöht. Es wurden insgesamt vier Messreihen durchgeführt, hiervon zwei bei niedrigem Feld (LV) und zwei weitere bei hohem Feld (HV). Bei beiden Feldern wurde jeweils eine Messreihe bei Raumtemperaturen (RT) und eine im Temperaturbereich der Curie-Temperatur (T_{C}) durchgeführt. Bei Raumtemperaturen und hohem Feld konnte sich die Spannung bis etwa 800 V, was etwa 55 V/µm entspricht, erhöht werden. Durch das Anlegen einer Vorspannung an die PTC-Bereiche und die damit verbundene Temperaturerhöhung von Raumtemperatur (RT) auf die Curie-Temperatur (T_{C}) konnten sowohl im niedrigen Feld (LV) wie auch in hohem Feld (HV) höhere Durchstimmbarkeiten n erzielt werden. So konnte beispielsweise für eine Vorspannung an der ersten dielektrischen Schicht (BV) von 20 V/µm bei Curie-Temperatur eine Durchstimmbarkeit von etwa 17 erreicht werden.

Die Erfindung ist nicht durch die Beschreibung anhand der Ausführungsbeispiele beschränkt. Vielmehr umfasst die Erfindung jedes neuen Merkmals sowie jede Kombination von Merkmalen, dass insbesondere jede Kombination von Merkmalen in den Patentansprüche beinhaltet, auch wenn diese Merkmale oder diese Kombination selbst nicht explizit in den Patentansprüchen oder Ausführungsbeispielen angegeben ist.

### Bezugszeichenliste

1) erste dielektrische Schicht
2) erste Elektrode
2') zweite Elektrode
3) Kondensatorbereich
4) erster PTC-Bereich
5) zweite dielektrische Schicht
6) erste Zwischenschicht
7) dritte dielektrische Schicht
8) zweite Zwischenschicht
9) zweiter PTC-Bereich
10) elektrische Kontaktierung des ersten PTC-Bereichs 10') elektrische Kontaktierung des zweiten PTC-Bereichs
11) elektrische Kontaktierung der ersten dielektrischen Schicht

## Patentansprüche

1. Varaktor umfassend die folgenden Bestandteile:
- einen ersten PTC-Bereich (4), welcher ein Keramikmaterial mit einem positiven Temperaturkoeffizienten bezüglich des Widerstandes umfasst, und
- einen Kondensatorbereich (3) umfassend:
- - eine erste Elektrode (2),
- - eine zweite Elektrode (2'),
- - eine erste dielektrische Schicht (1), welche zwischen der ersten Elektrode (2) und der zweiten Elektrode (2') angeordnet ist,
wobei der erste PTC-Bereich (4) und der Kondensatorbereich (3) thermisch leitend miteinander verbunden sind, und
die Kapazität des Kondensatorbereichs (3) durch das Anlegen einer Vorspannung an:
- den ersten PTC-Bereich (4),
- den Kondensatorbereich (3),
- den ersten PTC-Bereich (4) und den Kondensatorbereich (3), veränderbar ist.

2. Varaktor nach Anspruch 1,
wobei der erste PTC-Bereich (4) durch Anlegen einer Spannung auf eine Temperatur einstellbar ist, bei der die erste dielektrische Schicht (1) eine maximale Durchstimmbarkeit im Hinblick auf die Dielektrizität aufweist.

3. Varaktor nach einem der vorhergehenden Ansprüche,
wobei der erste PTC-Bereich (4) durch Anlegen einer Spannung auf eine Temperatur einstellbar ist, bei der der dielektrische Verlust des Kondensatorbereiches (3) einstellbar ist.

4. Varaktor nach einem der vorhergehenden Ansprüche,
wobei der erste PTC-Bereich (4) auf der ersten Elektrode (2) angeordnet ist.

5. Varaktor nach einem der vorhergehenden Ansprüche,
wobei der erste PTC-Bereich (4) einen Dotierstoff aufweist.

6. Varaktor nach Anspruch 5,
zusätzlich umfassend:
- eine erste Zwischenschicht (6),
welche zwischen dem ersten PTC-Bereich (4) und der ersten Elektrode (2) angeordnet ist, und für die Dotierstoffe weitgehend undurchlässig ist.

7. Varaktor nach Anspruch 6,
zusätzlich umfassend:
- eine zweite dielektrische Schicht (5),
welche zwischen der ersten Zwischenschicht (6) und der ersten Elektrode (2) angeordnet ist.

8. Varaktor nach einem der vorhergehenden Ansprüche, zusätzlich umfassend:
- einen zweiten PTC-Bereich (9),
welcher mit dem Kondensatorbereich (3) thermisch leitend verbunden ist.

9. Varaktor nach Anspruch 8,
wobei der erste PTC-Bereich (4), der zweite PTC-Bereich (9) und der Kondensatorbereich (3) einen Schichtenstapel ausbilden, und der erste PTC-Bereich (4) und der zweite PTC-Bereich (9) an zwei sich gegenüberliegenden Seiten des Kondensatorbereichs (3) angeordnet sind.

10. Varaktor nach einem der vorhergehenden Ansprüche,
wobei der erste PTC-Bereich (4) eine elektrische Kontaktierung aufweist.

11. Varaktor nach einem der vorhergehenden Ansprüche,
wobei der erste PTC-Bereich (4) Ba₁₋ₓSrₓTi_{1-y}Zr_{y}O₃ umfasst, wobei gilt: 0 < x < 1; 0 ≤ y < 1.

12. Varaktor nach einem der vorhergehenden Ansprüche,
wobei die erste dielektrische Schicht (1) Ba₁₋ₓSrₓTi_{1-y}Zr_{y}O₃ umfasst, wobei gilt: 0 < x < 1; 0 ≤ y < 1.

13. Varaktor nach einem der vorhergehenden Ansprüche, welcher in Bezug auf die erste dielektrische Schicht (1) einen symmetrischen Aufbau aufweist.

14. Verfahren zur Herstellung eines Varaktors nach einem der Ansprüche 1 bis 13, umfassend die Verfahrensschritte:
A) Ausformen eines Schichtenstapels umfassend mindestens die Schichten:
- erster PTC-Bereich (4),
- erste Elektrode (2),
- erste dielektrische Schicht (1),
- zweite Elektrode (2'),
B) Sintern des Schichtenstapes aus A), so dass ein Varaktor ausgebildet wird, bei dem sich die Kapazität des Kondensatorbereichs (3) durch das Anlegen einer Vorspannung an den ersten PTC-Bereich (4), den Kondensatorbereich (3) oder den ersten PTC-Bereich (4) und den Kondensatorbereich (3), verändern lässt.

15. Verfahren nach Anspruch 14,
wobei im Verfahrensschritt A) ein erster PCT-Bereich (4) erzeugt wird, der Dotierstoffe umfasst, und eine erste Zwischenschicht (6) ausgeformt wird, welche zwischen dem ersten PTC-Bereich (4) und der ersten Elektrode (2) angeordnet ist, und für die Dotierstoffe weitgehend undurchlässig ist.

## Claims

1. Varactor comprising the following component parts:
- a first PTC region (4), which comprises a ceramic material having a positive temperature coefficient with respect to the resistance, and
- a capacitor region (3) comprising:
- - a first electrode (2),
- - a second electrode (2'),
- - a first dielectric layer (1), which is arranged between the first electrode (2) and the second electrode (2'),
wherein the first PTC region (4) and the capacitor region (3) are thermally conductively connected to one another, and the capacitance of the capacitor region (3) can be altered by the application of a bias voltage to:
- the first PTC region (4),
- the capacitor region (3),
- the first PTC region (4) and the capacitor region (3).

2. Varactor according to Claim 1,
wherein the first PTC region (4) is adjustable by application of a voltage to a temperature at which the first dielectric layer (1) has a maximum tunability with regard to the dielectricity.

3. Varactor according to either of the preceding claims,
wherein the first PTC region (4) is adjustable by application of a voltage to a temperature at which the dielectric loss of the capacitor region (3) is adjustable.

4. Varactor according to any of the preceding claims, wherein the first PTC region (4) is arranged on the first electrode (2).

5. Varactor according to any of the preceding claims, wherein the first PTC region (4) comprises a dopant.

6. Varactor according to Claim 5,
additionally comprises:
- a first intermediate layer (6),
which is arranged between the first PTC region (4) and the first electrode (2), and is largely impermeable to the dopants.

7. Varactor according to Claim 6,
additionally comprises:
- a second dielectric layer (5),
which is arranged between the first intermediate layer (6) and the first electrode (2).

8. Varactor according to any of the preceding claims, additionally comprises:
- a second PTC region (9)
which is thermally conductively connected to the capacitor region (3).

9. Varactor according to Claim 8,
wherein the first PTC region (4), the second PTC region (9) and the capacitor region (3) form a layer stack, and the first PTC region (4) and the second PTC region (9) are arranged at two opposite sides of the capacitor region (3).

10. Varactor according to any of the preceding claims, wherein the first PTC region (4) has an electrical contact-connection.

11. Varactor according to any of the preceding claims, wherein the first PTC region (4) comprises Ba₁₋ₓSrₓTi_{1-y}Zr_{y}O₃, wherein the following holds true:
0 < x < 1; 0 ≤ y < 1.

12. Varactor according to any of the preceding claims, wherein the first dielectric layer (1) comprises Ba₁₋ₓSrₓTi_{1-y}Zr_{y}O₃, wherein the following holds true:
0 < x < 1; 0 ≤ y < 1.

13. Varactor according to any of the preceding claims, which has a symmetrical construction with respect to the first dielectric layer (1).

14. Method for producing a varactor according to any of Claims 1 to 13, comprising the following method steps:
A) shaping a layer stack comprising at least the following layers:
- first PTC region (4),
- first electrode (2),
- first dielectric layer (1),
- second electrode (2'),
B) sintering the layer stack from A), such that a varactor is formed, in which the capacitance of the capacitor region (3) can be altered by the application of a bias voltage to the first PTC region (4), the capacitor region (3) or the first PTC region (4) and the capacitor region (3).

15. Method according to Claim 14,
wherein, in method step A), a first PTC region (4) comprising dopants is produced, and a first intermediate layer (6) is shaped, which is arranged between the first PTC region (4) and the first electrode (2), and is largely impermeable to the dopants.

## Revendications

1. Varactor comprenant les composants suivants :
une première partie PTC (4) qui comporte un matériau céramique dont la résistance présente un coefficient de température positif et
une partie (3) formant condensateur et comprenant :
une première électrode (2),
une deuxième électrode (2') et,
une première couche diélectrique (1) disposée entre la première électrode (2) et la deuxième électrode (2'),
la première partie PTC (4) et la partie (3) formant condensateur étant reliées l'une à l'autre de manière thermiquement conductrice et
la capacité de la partie (3) formant condensateur pouvant être modifiée par application d'une pré-tension sur :
la première partie PTC (4),
la partie (3) formant condensateur et
la première partie PTC (4) et la partie (3) formant condensateur.

2. Varactor selon la revendication 1, dans lequel la première partie PTC (4) peut être amenée par application d'une tension à une température à laquelle la première couche diélectrique (1) présente une capacité maximale d'adaptation en termes de diélectricité.

3. Varactor selon l'une des revendications précédentes, dans lequel la première partie PTC (4) peut être amenée par application d'une tension à une température à laquelle la perte diélectrique de la partie (3) formant condensateur peut être ajustée.

4. Varactor selon l'une des revendications précédentes, dans lequel la première partie PTC (4) est disposée sur la première électrode (2).

5. Varactor selon l'une des revendications précédentes, dans lequel la première partie PTC (4) présente une substance de dopage.

6. Varactor selon la revendication 5, comprenant de plus une première couche intermédiaire (6) disposée entre la première partie PTC (4) et la première électrode (2) et largement imperméable à la substance de dopage.

7. Varactor selon la revendication 6, comprenant en outre une deuxième couche diélectrique (5) disposée entre la première couche intermédiaire (6) et la première électrode (2).

8. Varactor selon l'une des revendications précédentes, comprenant en outre une deuxième partie PTC (9) raccordée de manière thermiquement conductrice à la partie (3) formant condensateur.

9. Varactor selon la revendication 8, dans lequel la première partie PTC (4), la deuxième partie PTC (9) et la partie (3) formant condensateur forment un empilement de couches, la première partie PTC (4) et la deuxième partie PTC (9) étant disposées sur deux côtés opposés de la partie (3) formant condensateur.

10. Varactor selon l'une des revendications précédentes, dans lequel la première partie PTC (4) présente un ensemble de mise en contact électrique.

11. Varactor selon l'une des revendications précédentes, dans lequel la première partie PTC (4) comporte du Ba₁₋ₓSrₓTi_{1-y}Zr_{y}O₃, avec :
0 < x < 1; 0 ≤ y < 1.

12. Varactor selon l'une des revendications précédentes, dans lequel la première couche diélectrique (1) comporte du Ba₁₋ₓSrₓTi_{1-y}Zr_{y}O₃, avec :
0 < x < 1; 0 ≤ y < 1.

13. Varactor selon l'une des revendications précédentes, qui présente une structure symétrique en termes de la première couche diélectrique (1).

14. Procédé de fabrication d'un varactor selon l'une des revendications 1 à 13, le procédé comportant les étapes qui consistent à :
A) former un empilement de couches comprenant au moins les couches suivantes n:
une première partie PTC (4),
une première électrode (2),
une première couche diélectrique (1) et
une deuxième électrode (2'),
B) frittage de l'empilement de couches de A) de manière à former un varactor dans lequel la capacité de la partie (3) formant condensateur peut être modifiée par application d'une pré-tension sur la première partie PTC (4), la partie (3) formant condensateur ou la première partie PTC (4) et la partie (3) formant condensateur.

15. Procédé selon la revendication 14, dans lequel à l'étape A), une première partie PTC (4) qui comporte des substances de dopage est formée, et une première couche intermédiaire (6) disposée entre la première partie PTC (4) et la première électrode (2) et largement imperméable pour les substances de dopage est formée.
